# EUROPÄISCHE PATENTSCHRIFT

(11) **EP 0 318 434 B1**
(45) Veröffentlichungstag und Bekanntmachung des Hinweises auf die Patenterteilung: **01.02.1995**
(21) Anmeldenummer: 88810807.3
(22) Anmeldetag: 25.11.1988
(51) Int. Cl.: B29C 47/20, F16L 9/18

(54) **Extruderanlage zur Herstellung eines Kunststoff-Rohres**
Extruder for manufacturing a plastic pipe
Dispositif d'extrusion pour la fabrication d'un tube en plastique

(30) Priorität: 25.11.1987 CH 4594/87
(43) Veröffentlichungstag der Anmeldung: 31.05.1989
(73) Patentinhaber: Sanicola, Luigi, CH-8952 Schlieren (CH)
(72) Erfinder: Sanicola, Luigi, CH-8952 Schlieren (CH)
(74) Vertreter: Werffeli, Heinz R., Dipl.-Ing.ETH.

(56) Entgegenhaltungen:
- EP-A- 0 244 154
- FR-A- 1 471 485
- FR-A- 1 510 536
- FR-A- 2 344 397
- FR-A- 2 367 599
- GB-A- 2 045 674
- US-A- 3 402 682
- US-A- 3 764 245
- US-A- 4 655 987

## Beschreibung

Die Erfindung betrifft eine Extruderanlage zur Herstellung eines Kunststoff-Rohres dessen Wandung im Querschnitt betrachtet einem kreisringförmig gebogenen Mehrstegprofil mit parallel zur Rohrlängsachse sich erstreckenden Hohlkammern entspricht, wobei der Extruderkopf zur Erzeugung des Rohrprofils in seinem Innern mit einem konischen Dorn versehen ist, dessen Aussenbereich entsprechend der gewünschten Anzahl von herzustellenden Hohlkammern segment- und fingerartig in eine Mehrzahl von Aussenteilen unterteilt ist und einen mindestens annähernd zylindrischen Innenteil mit Spiel umgibt, dass die Aussenteile sowie der Innenteil an ihren freien Stirnseiten mit je mindestens einer Öffnung versehen sind, die über die Halterung des Dornes mit der Aussenatmosphäre verbunden sind, und dass der zwischen dem Innenteil und den Aussenteilen gebildete Ringspalt zusätzlich eintrittsseitig mit der Aussenseite des Dornes in Verbindung steht.

Es ist z.B. aus der FR-A- 1 510 536 und der EP-A-0 244 154 eine Extruderanlage der eingangs genannten Art bekannt, die jedoch den Nachteil aufweisen, dass bei diesen der Extruderkopf derart ausgebildet ist, dass das aus dem Extruder zugeführte extrudierte Kunststoffmaterial über einen relativ kleinen Zufuhrquerschnitt dem Extruderkopf zugeführt und dann über einen in radialer Richtung nach aussen sich erstreckenden und damit (aus geometrischen Gründen mit zunehmendem Radius) zwangsläufig stark zunehmenden Durchströmquerschnitt dem äusseren und inneren Ringspalt zugeführt werden.

Auf diese Weise ist es insbesondere bei Ausführungsformen gemäss dem Stand der Technik bei relativ schlecht fliessendem Kunststoffmaterial nicht möglich, eine einwandfreie Ausfüllung sämtlicher Extruderkopfteile bei höheren Produktionsgeschwindigkeiten zu erzielen.

Aufgabe der vorliegenden Erfindung ist die Schaffung eines Extruderkopfes, welcher diese Nachteile nicht aufweist.

Diese Aufgabe wird erfindungsgemäss nach Anspruch 1 gelöst.

Erfindungsgemäss befindet sich der geringste Zuströmquer-schnitt einer zum äusseren Ringspalt überleitenden Zuströmkammer- und zwangsläufig damit der höchste Druck im zugeführten Kunststoff- im Eintrittsbereich des äusseren Ringspaltes. Aus diesem Eintrittsbereich wird der für den inneren, auf einem geringeren Radius (=reduzierter Durchströmquerschnitt) sich befindenden Ringspalt, erforderliche Kunststoff abgezweigt.

Eine solche erfindungsgemässe Ausführungsform ermöglicht selbst bei hohen Produktionsgeschwindigkeiten eine einwandfreie Rohrqualität, was durch die Praxis einwandfrei belegbar ist.

Zur Herstellung eines mindestens teilweise wärmeisolierten Kunststoff-Rohres ist es vorteilhaft, wenn mindestens einige der Aussenteile mit je einem Zufuhrkanal zur Zufuhr eines Wärmedämmstoffes in die zu bildenden Hohlkammern versehen sind.

Nachstehend wird die Erfindung anhand einem in der Zeichnung dargestellten Ausführungsbeispiel näher erläutert. Es zeigt:
- Fig.1: eine Stirnansicht auf eine beispielsweise Ausführungsform eines erfindungsgemässen Kunststoff-Rohres;
- Fig.2: eine Seitenansicht des in Fig. 1 dargestellten Kunststoff-Rohres;
- Fig.3: einen teilweise im Schnitt dargestellten Extruderkopf einer erfindungsgemässen Extruderanlage;
- Fig.4: eine Stirnansicht in Richtung des Pfeiles A in Fig. 3 auf den konischen Dorn;
- Fig.5: einen Schnitt längs der Linie V-V in Fig. 4 durch den konischen Dorn; und
- Fig.5a: in vergrössertem Massstab eine alternative Ausführungsform eines Details des in Fig. 5 dargestellten Dornes.

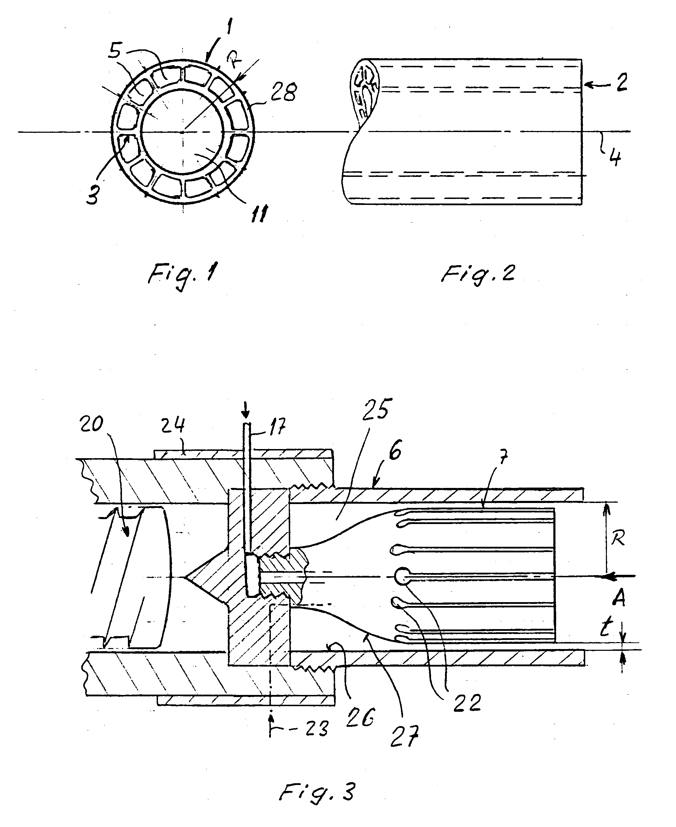

Wie insbesondere aus den Figuren 1 und 2 ersichtlich, weist die Wandung 1 des erfindungsgemässen Kunststoff-Rohres 2 im Querschnitt betrachtet ein kreisringförmig gebogenes Doppelstegprofil 3 mit parallel zur Rohrlängsachse 4 sich erstrekkenden Hohlkammern 5 auf. Dabei weisen die einzelnen Kammern 5 in Querschnitt betrachtet mindestens annähernd die Form eines Kreisringsegmentes auf.

Soll ein gut wärmegedämmtes Rohr 2 hergestellt werden, dann ist es möglich, bei der Herstellung dieses Rohres 2 die Hohlkammern 5 gleichzeitig mit einem Wärmedämmstoff, zum Beispiel Polysterolschaum, auszufüllen.

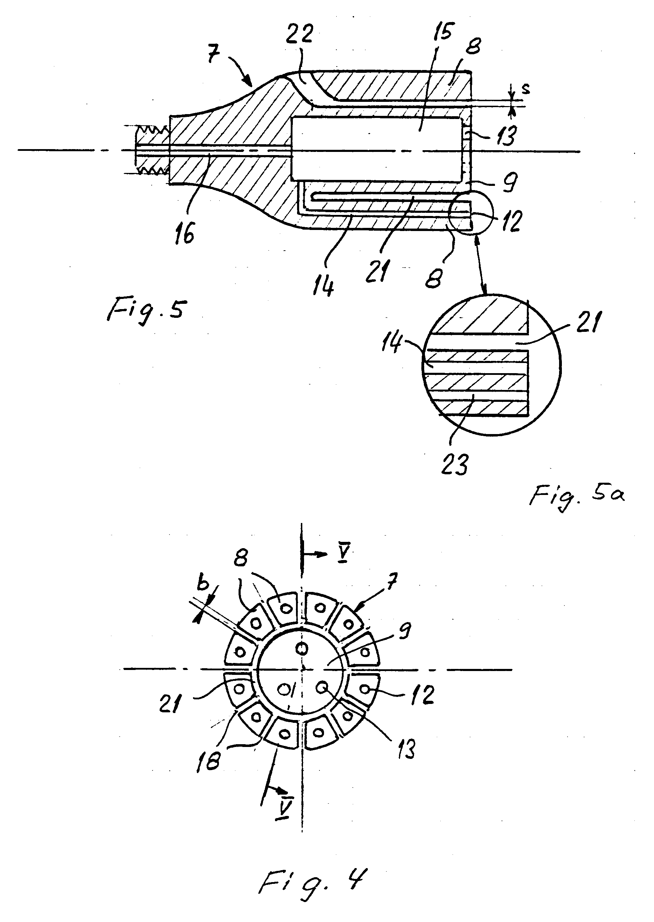

Zur Herstellung dieses Kunststoff-Rohres 2 wird ein Extrudierverfahren angewendet. Dabei weist die zu verwendende Extruderanlage (nicht dargestellt), die von bekannter herkömmlicher Ausbildung sein kann, einen wie aus den Figuren 3 bis 5 ersichtlichen Extruderkopf 6 auf.

Wie insbesondere aus den Figuren 3 bis 5 ersichtlich, ist der Extruderkopf 6 zur Erzeugung des in den Figuren 1 und 2 dargestellten Rohrprofils in seinem Innern mit einem konischen Dorn 7 versehen, dessen Aussenbereich entsprechend der Anzahl von herzustellenden Hohlkammern 5 segment- und fingerartig in eine Mehrzahl von Aussenteilen 8 unterteilt ist, und einen zylindrischen Innenteil 9 mit einem der gewünschten Wandstärke entsprechenden Spiel s umgibt.

Um einen Kollaps der derart gebildeten Hohlräume 5 und 11 bzw. des derart extrudierten Rohrprofiles vor einer genügenden Erkaltung und Erstarrung des extrudierten Materials zu vermeiden, sind die Aussenteile 8 sowie der Innenteil 9 wie aus den Figuren 4 und 5 ersichtlich, an ihren freien Stirnseiten mit je mindestens einer Öffnung 12 bzw. 13 versehen, die über die Kanäle 14,15,16 und 17 mit der Aussenatmosphäre verbunden sind, von wo selbsttätig Luft in die in Bildung begriffenen Hohlkammern 5 nachgesaugt wird.

Die Aussenteile 8 sind durch in Radialebenen verlaufende Spalte 18, deren Breite b der Dicke der herzustellenden Rohrwandungsstege 19 entspricht, seitlich voneinander getrennt.

Um ein einwandfreies Einlaufen des zu verarbeitenden flüssigen Kunststoffes vom Extruder 20 in den zwischen dem Innenteil 9 und den Aussenteilen 8 gebildeten Ringspalt 21 zu erleichtern, ist der letztere ausser über die Spalten 18 zusätzlich eintrittsseitig über zwischen den einzelnen Aussenteilen 8 schräg nach hinten und aussen verlaufende Zufuhrbohrungen 22, deren Durchmesser mindestens zweimal, vorzugsweise mindestens dreimal so gross wie die Spaltbreite b ist, mit der Aussenseite des Dornes 7 verbunden.

Auf der Aussenseite des Extruderkopfes 6 ist eine Heizanordnung 24 vorgesehen.

Soll eine Hohlkammer 5 bei der Herstellung des Rohrprofiles manchmal gleichzeitig mit einem Wärmedämmstoff gefüllt werden, dann ist es zweckmässig, wenn, wie aus Fig. 5a ersichtlich, der zur Bildung dieser Hohlkammer 5 dienende Aussenteil 8 mit einem Zufuhrkanal 23 zur Zufuhr eines Wärmedämmstoffes in diese zu bildende Hohlkammer 5 versehen ist. Sollen die Hohlkammern 5 immer mit einem Wärmedämmstoff ausgeschäumt werden, dann können die Luftzufuhrkanäle 14 in den Aussenteilen 8 sogar gänzlich weggelassen werden.

Ein gemäss den Figuren 1 und 2 ausgebildetes Rohr 2 kann zum Beispiel als Elektroinstallationsrohr verwendet werden. Dabei bietet dieses erfindungsgemässe Rohr bei fast gleichem Materialaufwand wie bisher einen erheblich verbesserten mechanischen Schutz der durch ein solches Rohr hindurchgezogenen Elektrokabel gegen eine Beschädigung der letzteren, was insbesondere bei erdverlegten Installationsrohren von grosser Bedeutung ist.

Bei Hausinstallationen ist es zum Beispiel auch möglich, durch den inneren Rohrkanal 11 ein oder mehrere 380V-Kabel, durch einen oder mehrere der äusseren Rohrkanäle 5 ein oder mehrere 220V-Kabel, und durch einen oder mehrere der restlichen Rohrkanäle 5 ein oder mehrere Schwachstromkabel, alle voneinander räumlich getrennt, zu führen.

Ein gemäss den Figuren 1 und 2 ausgebildetes Rohr 2 kann selbstverständlich auch zur Durchleitung von gasförmigen und/oder flüssigen Medien verwendet werden. Dabei ist es zum Beispiel möglich, durch den inneren Rohrkanal 11 eine erste Flüssigkeit und durch mindestens einen Teil der äusseren Rohrkanäle 5, in gleicher oder zueinander entgegengesetzter Richtung, mit gleicher oder unterschiedlicher Temperatur, mindestens eine weitere Flüssigkeit und/oder ein Gas durchzuleiten. Derart kann das Rohr 2 auch als Wärmeaustauscher dienen.

Zur Bildung eines wärmeisolierten Rohres 2 ist es auch möglich, die äusseren Rohrkanäle 5 bei der Extrusion des Rohrprofiles mit einem wärmedämmenden Material, zum Beispiel mit Polystyrolschaum, auszufüllen.

Selbstverständlich ist es auch möglich, bei geeigneter Matrialwahl das erfindungsgemässe Rohr 2 als formstabiles Bauteil, zum Beispiel für Maste, Gerüste oder andere Rohrkonstruktionen zu verwenden.

Es ist auch möglich, nach dem gleichen Prinzip die Wandung des Rohres z.B. mit einem Dreistegprofil, d.h. zwei konzentrisch zueinander angeordneten Hohlkammerreihen, auszubilden.

## Patentansprüche

1. Extruderanlage zur Herstellung eines Kunststoff-Rohres dessen Wandung im Querschnitt betrachtet einem kreisringförmig gebogenen Mehrstegprofil mit parallel zur Rohrlängsachse (4) sich erstreckenden Hohlkammern (5) entspricht, wobei der Extruderkopf (6) zur Erzeugung des Rohrprofils in seinem Innern mit einem konischen Dorn (7) versehen ist, dessen Aussenbereich entsprechend der gewünschten Anzahl von herzustellenden Hohlkammern (5) segment- und fingerartig in eine Mehrzahl von Aussenteilen (8) unterteilt ist und einen mindestens annähernd zylindrischen Innenteil (9) mit Spiel (s) umgibt, dass die Aussenteile (8) sowie der Innenteil (9) an ihren freien Stirnseiten mit je mindestens einer Öffnung (12,13) versehen sind, die über die Halterung des Dornes (7) mit der Aussenatmosphäre verbunden sind, und dass der zwischen dem Innenteil (9) und den Aussenteilen (8) gebildete Ringspalt (21) zusätzlich eintrittsseitig mit der Aussenseite des Dornes (7) in Verbindung steht, dadurch gekennzeichnet, dass der Extruderkopf (6) eintrittsseitig mit einer Zuströmkammer (25) versehen ist, deren Aussenseite (26) einer Kreiszylindermantelfläche (26) mit einem dem Aussenradius des herzustellenden Rohres entsprechenden Radius (R) entspricht, und deren Innenseite (27) derart ausgebildet ist, dass der Durchströmquerschnitt dieser Kammer (25) in Durchströmrichtung derselben gesehen kontinuierlich abnimmt, und zur eintrittsseitigen Verbindung des inneren Ringspaltes (21) mit dieser Kammer (25) unmittelbar vor Erreichen des geringsten, der Ringdicke (t) des ringförmigen Rohraussenteiles (28) entsprechenden Durchströmquerschnittes dieser Kammer (25) von der Aussenseite des Dornes (7) in dessen Inneres abgehende, zwischen den einzelnen segment- und fingerartigen Aussenteilen (8) verlaufende Zufuhrbohrungen (22) vorgesehen sind, deren Durchmesser eintrittsseitig grösser als die seitlich zwischen den einzelnen fingerartigen Aussenteilen (8) vorliegende Spaltbreite (b) ist.

2. Extruderanlage nach Anspruch 1, dadurch gekennzeichnet, dass mindestens einige der Aussenteile (8) mit je einem Zufuhrkanal (23) zur Zufuhr eines Wärmedämmstoffes in die zu bildenden Hohlkammern (5) versehen sind.

## Claims

1. Extruder for the manufacture of a plastic pipe, the wall of which, when considered from its cross section, corresponds to an annular bent multiple web profile with hollow chambers (5) located parallel to the longitudinal axis of the pipe (4), whereby for the production of the pipe profile the inside of the extruder head (6) has been provided with a conical mandrel (7), the outer area of which corresponding to the requested number of hollow chambers (5) to be produced is divided up into a multitude of external parts (8) shaped like segments and fingers, which surrounds an almost cylindrical internal port (9) with play in such a way that the free face of the external parts (8) as well as of the internal part (9) is provided with at least one opening each (12, 13) which is linked to the outside atmosphere by the holding device of the mandrel (7), and in such a way that the annual gap (21) formed between the internal part (9) and the external parts (8) is linked on the entry side with the outside of the mandrel (7) in addition characterised by the fact that the entry side of the extruder head (6) has been provided with an inflow chamber (25), the outside (26) of which corresponds to the surface area of a regular cylinder (26) with a radius (R) identical with the outside radius of the pipe to be produced, and the inside (27) of which is shaped in such a way that the flow-through cross section of this chamber (25) in flow direction decreases continuously and feed boreholes (22), which run between the individual segment and finger like external parts (8) leading from the outside of the mandrel (7) to its inside, have been provided for entry side connection of the inner annual gap (21) with this chamber (25) directly before reaching the narrowest flow through cross section of this chamber corresponding to the annular thickness (t) of the annular external pipe part (28), whereby the diameters of the feed boreholes on the entry side are larger than the lateral gap width (b) between the individual finger-like external parts (8).

2. Extruder as set forth in claim 1 characterised by the fact that at least some of the external parts (8) are provided with a feed channel (23) each for the insertion of a heat insulator into the hollow chambers (5) to be produced.

## Revendications

1. Extrudeuse conçue pour la fabrication d'un tube en matière synthétique, dont la paroi, vue en coupe, correspond à un profil à plusieurs âmes, plié en anneau de cercle, avec des cavités (5) situées parallèlement à l'axe longitudinal du tube (4), la filière d'extrudeuse (6) étant munie à l'intérieur, pour constituer le profil du tube, d'un mandrin conique (7) dont le secteur externe est divisé en plusieurs parties externes (8) segmentées et en forme de doigts correspondant au nombre de cavités (5) à produire, et entoure une partie interne (9) au moins approximativement cylindrique avec un jeu (s), de sorte que les parties externes (8) ainsi que la partie interne (9) disposent en leurs faces frontales libres d'au moins une ouverture (12, 13) chacune, qui est reliée à l'atmosphère extérieure par l'intermédiaire du support du mandrin (7), et que le passage annulaire (21) formé entre la partie interne (9) et les parties externes (8) est en plus connecté, coté entrée, à la face externe du mandrin (7), de façon que la filière d'extrudeuse (6) est munie, côté entrée, d'une chambre d'affluence (25) dont la face externe (26) correspond à une surface d'enveloppe cylindrique circulaire (26) avec un rayon (R) correspondant au rayon extérieur du tube à fabriquer, et dont la face interne (27) est formée de manière à ce que la section de passage de cette chambre (25) diminue continuellement, vu dans le sens de passage de la dite chambre, et que, afin de relier, côté entrée, le passage annulaire intérieur (21) à cette chambre (25) immédiatement avant d'arriver à la section de passage minimale de cette chambre (25), correspondant à l'épaisseur annulaire (t) de la partie annulaire externe du tube (28), des perçages d'alimentation (22) partant de la face externe du mandrin (7) vers son intérieur et passant entre les différentes parties externes (8) segmentées et en forme de doigts sont prévus, dont le diamètre côté entrée est supérieur à la largeur de passage (b) existant latéralement entre les différentes parties externes (8) en forme de doigts.

2. Extrudeuse selon la revendication 1, caractérisée en ce qu'au moins quelques unes des parties externes (8) sont munies d'un canal d'alimentation (23), permettant d'introduire un calorifuge dans les cavités (5) à former.
